Europäisches Patentamt

(19) European Patent Office

Office européen des brevets

(11) Publication number: **0 076 882**
**B1**

(12) **EUROPEAN PATENT SPECIFICATION**

(45) Date of publication of patent specification: **17.07.85**

(51) Int. Cl.⁴: **G 01 F 1/34, G 01 F 1/74**

(21) Application number: **81304752.9**

(22) Date of filing: **13.10.81**

(54) Device and method for determining flow rates in a two-phase stream.

(43) Date of publication of application:
**20.04.83 Bulletin 83/16**

(45) Publication of the grant of the patent:
**17.07.85 Bulletin 85/29**

(84) Designated Contracting States:
**DE FR GB IT SE**

(56) References cited:
**US-A-2 984 105**
**US-A-4 178 801**
**US-A-4 231 262**

(73) Proprietor: **ALBERTA OIL SANDS TECHNOLOGY AND RESEARCH AUTHORITY 500 Highfield Place 10010-106 Street Edmonton Alberta T5K 2g8 (CA)**

(72) Inventor: **Rhodes, Edward 214 Willowdale Avenue Waterloo Ontario (CA)**
Inventor: **Scott, Donald S. 382 Arden Place Waterloo Ontario (CA)**

(74) Representative: **Hind, Raymond Stenton et al c/o MATHISEN, MACARA & Co. European Patent Attorneys Lyon House Lyon Road Harrow Middlesex HA1 2ET (GB)**

Courier Press, Leamington Spa, England.

## Description

The present invention relates to flowmeters for measuring pressure drops indicative of flowrates in a two-phase flowing stream.

By two-phase flow there is meant a flowing stream containing gaseous and liquid phases of one or more components. Exemplary streams include wet steam, oil and gas, and air and water.

Flowmeters used to meter single-phase flow usually include a device measuring a pressure drop in the flowing stream, which pressure drop can be correlated with the flow rate of the stream through theoretical mathematical models.

In two-phase flow however it is usually desirable to obtain values of the individual gas and liquid flowrates, $W_g$ and $W_f$ respectively. These flowrates are usually expressed in terms of total mass flow (W) and quality of flow (x), which terms are defined as:

$$W=W_g+W_f;$$

and

$$x=\frac{W_g}{W_g+W_f}$$

A number of two-phase flowmeters have already been proposed. Two such meters, which correlate one of the above flowrate parameters with a pressure differential measurement, are the Orifice Plate Meter and the Venturi Meter. The Orifice Plate Meter comprises an orifice mounted across the conduit carrying a two-phase flow. An accelerational pressure drop is measured across the orifice plate. A mathematical model is then used to correlate the stream's total mass flow with the accelerational pressure differential measured.

The Venturi Meter comprises a venturi placed in the conduit carrying the two-phase flow. An accelerational pressure drop across the venturi is measured and correlated by mathematical models either to the quality and total mass flow of the stream or to the quality and a dimensionless modified Collins parameter $F_p$, which parameter will be later explained.

Both of the above two meters rely on one pressure differential measurement to evaluate parameters of two-phase flow.

Other two-phase flow meters have been proposed, which monitor two-phase flow with two or more measurements. One such meter employs a gamma ray densitometer to make void fraction measurements and a turbine meter or drag disc to obtain a second measurement. The two measurements are correlated mathematically to indicate the individual phase mass flowrates. This metering technique is limited to a very small quality range. It is also expensive, employing a delicate gamma ray densitometer instrument. In such two-phase streams as high pressure wet steam, such instruments would not be practical.

Very recently an Orifice-Couple Flowmeter has been proposed for two-phase flow, see K. Sekoguchi et al., "Two-Phase Flow Measurements with Orifice-Couple in Horizontal Pipe Line", Bulletin of the ISME, Vol. 21, No. 162, December 1978. The meter includes two segmental orifices or baffles in the conduit carrying the two-phase flow. Three pressure drop measurements are taken, two across the segmental orifices and the third across two of the orifices. The two individual pressure drops and the sum pressure drop are then correlated, by a model specific to this system, to the gas and liquid flowrates. This metering system appears to give very good results. A disadvantage to the system is that the data is not presented in a dimensionless form. Consequently, performances for different systems are difficult to predict.

We have postulated that, in order to meter two-phase flow, that is to evaluate two of the four flowrate parameters, quality, total mass flowrate, gas mass flowrate and liquid mass flowrate, one should use two independent relationships between two of these four parameters and such easily measured two-phase properties as pressure and temperature. In this way two physical aspects of two-phase flow would be used, which aspects would follow independent laws.

Theoretical two-phase models are known which may be used to correlate an accelerational pressure differential with flowrates and to correlate a frictional pressure drop with flowrates.

According to the invention, there is provided a flowmeter for measuring differential pressures indicative of flowrates in a conduit carrying a gas and liquid flowing stream, wherein the flowmeter comprises first means for creating a frictional drop pressure drop in the conduit, means for measuring the frictional pressure drop, second means for creating an accelerational pressure drop in the conduit, and means for measuring the accelerational pressure drop, the second means preferably being located downstream of the first means.

Further according to the invention, there is provided a method for measuring differential pressures indicative of flowrates in a conduit carrying a gas and liquid flowing stream, the method comprising the steps of creating a frictional pressure drop in the conduit, measuring the frictional pressure drop, creating an accelerational pressure drop in the conduit, measuring the accelerational pressure drop, and determining by mathematical relationships incorporating the said measured pressure drops the flowrates of the individual phases of the stream.

In a preferred form of the invention, the frictional pressure drop is measured across a twisted tape in

2

the conduit carrying the two-phase flow and the accelerational pressure drop is measured across a venturi positioned in the conduit downstream of the twisted tape. This preferred combination of measurements takes advantage of a known fact that the venturi accepts annular flow to give an excellent correlation between the pressure drop measurement and total mass flow. Thus the twisted tape, upstream of the venturi, enhances the performance of the venturi by promoting, annular flow. Furthermore, the independence of the twisted tape and the venturi measurements is inherent since the former measures the frictional pressure drop while the latter measures an accelerational pressure drop.

In another preferred aspect of the invention a third parameter is measured to evaluate the physical properties of the two-phase flow. This measurement is most preferably a measurement of the temperature or the static pressure of the flow. In a two-phase one-component stream such as wet steam, either the temperature or static pressure measurement can be used as a measure of the density and viscosity of the stream. In a two-phase two-component stream, both a temperature and static pressure measurement may be needed. These physical properties are used in the mathematical models used to correlate the pressure drop measurements with the individual mass flowrates.

An embodiment of the invention will now be described, by way of example only with reference to the accompanying diagrammatic drawings:

Figure 1 shows an embodiment of a twisted tape swirl generator of a flowmeter in accordance with the invention, the generator being used to create a frictional pressure drop in a two-phase flow;

Figure 2 shows an embodiment of a venturi of the flowmeter, the venturi being used to create an accelerational pressure drop in the two-phase flow;

Figure 3 shows a computer program used to correlate the pressure drop measurements across the twisted tape and venturi with the individual flowrates of the two phases;

Figure 4 is a plot illustrating the accuracy of the flowmeter and the correlating algorithm of Figure 3 for the gas flowrate $W_g$; the actual gas flowrate is plotted against the gas flowrate obtained by correlating the pressure drop measurement from the flowmeter with the gas, flowrate; and

Figure 5 is a plot similar to Figure 4, showing the accuracy of the flowmeter and correlating algorithm for the liquid mass flowrate $W_f$.

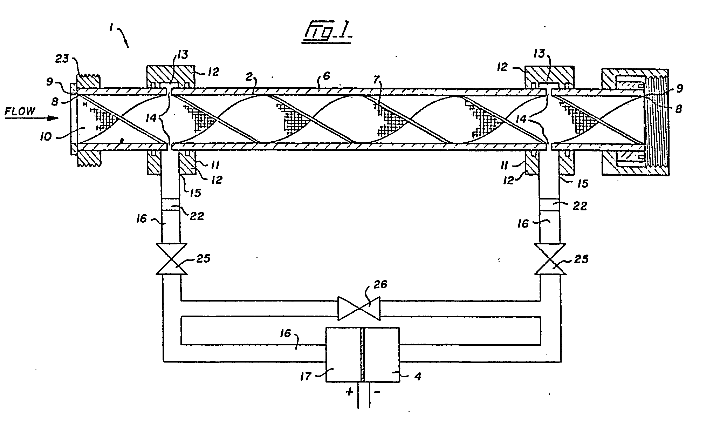

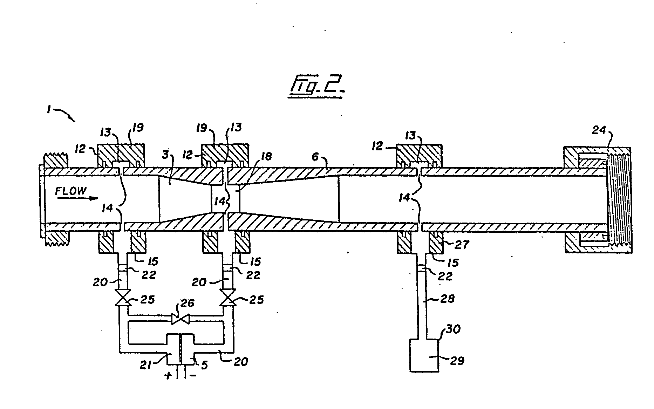

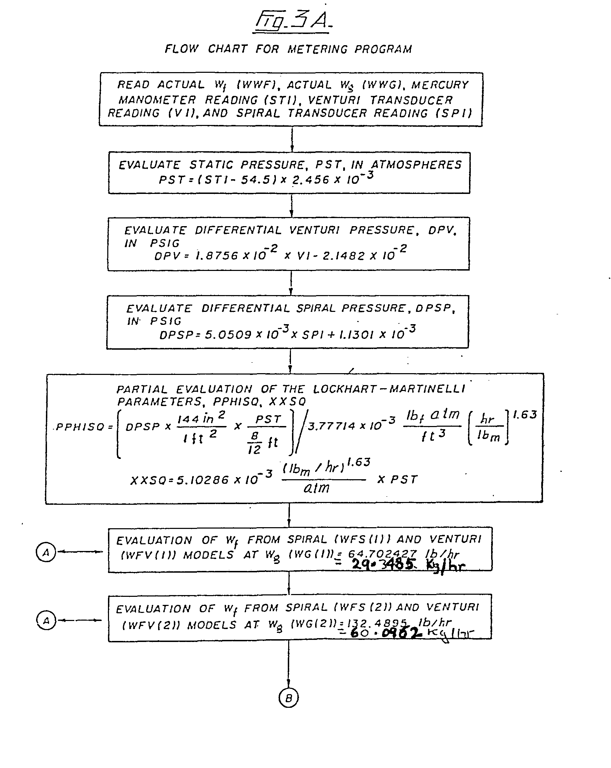

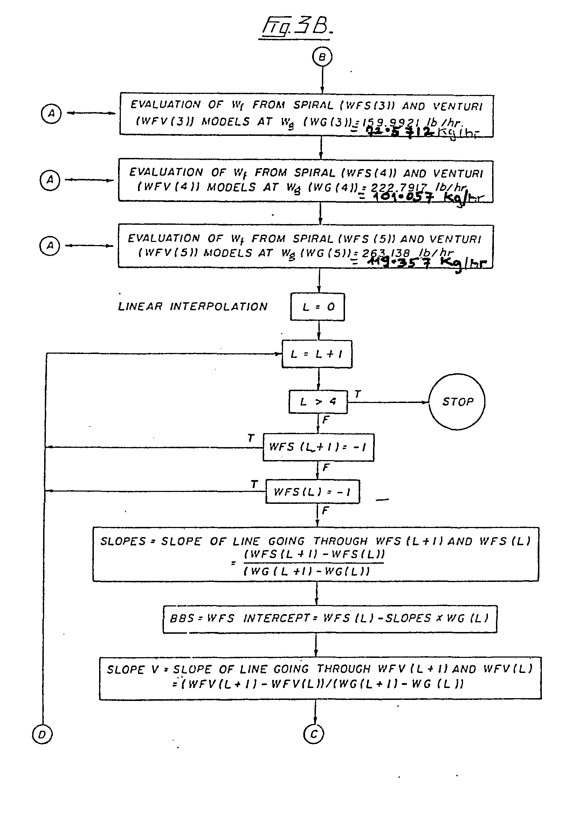

The flowmeter 1 in accordance with the preferred embodiment of the present invention is functional to create and measure pressure drops in the two-phase flow stream, which pressure drops can be correlated to the individual flowrates of the two phases. As shown in Figures 1 and 2, the flowmeter 1 includes a twisted tape swirl generator 2 and a venturi 3 mounted in a horizontal conduit 6 carrying a two-phase flow stream. Pressure transducer means 4 and 5 respectively are provided to measure the pressure differential across the twisted tape 2 and the venturi 3.

The twisted tape swirl generator 2 provides a means for creating a frictional pressure drop in the horizontal conduit 6. Alternatively a linear length of tubing could be used to create a frictional pressure drop, however this would necessitate a long length of tubing. Twisted tape swirl generators are known *per se* in heat exchangers, see for example E. Smithberg et al., "Friction and Forced Convection Heat-Transfer Characteristics in Tubes with Twisted Tape Swirl Generators", Journal of Heat Transfer, February, 1964, p. 39, and G. S. R. Narasimhaumurty et al., "Effect of Turbulence Promoters in Two-Phase Gas Liquid Flow in Horizontal Pipes", Chemical Engineering Science, Vol. 24, 1969, p. 331. Briefly, the twisted tape 2 includes a length of steel tape 7 having a width equal to the diameter of the conduit 6. The tape 7 is twisted into the conduit 6 to a desired pitch and the ends 8 secured into notches 9 in the conduit 6. Preferably the upstream edge 10 of the tape is aligned vertically to split the entering liquid phase evenly. The twisted tape induces a swirled flow, otherwise termed annular flow. Annular flow is a two-phase flow pattern characterised by an annular film of liquid travelling along the inner wall of the tube with the gaseous flow moving through the centre core of the tube at a much larger velocity. A frictional pressure drop model for gas-liquid flow through a twisted tape has been developed in the aforesaid paper by G. S. R. Narasimhamurty.

To measure the frictional pressure drop across the twisted tape 2, two pressure taps 11 are provided leading into the conduit 6, preferably at points spaced slightly inwardly from the ends 8 of the tape 7. This spacing allows the annular flow pattern, known to be created in the twisted tape 2, to develop and also avoids the possible entrance and exit pressure losses. Each pressure tap 11 consists of a piezometric ring 12 sealed around the conduit 6 enclosing an annulus 13 between the ring 12 and the conduit 6. A plurality of holes 14 through the walls of the conduit 6 open into the annulus 13. Through a connecting hole 15 in the piezometric ring 12, is connected a pressure line 16 leading to one side of a diaphragm magnetic-reluctance transducer 17. The transducer 17 is known *per se* and functions to convert a pressure differential into an electric signal.

The venturi 3 is shown in detail in Figure 2. The venturi 3 provides means for creating an accelerational pressure drop in the conduit 6. Alternatively, a nozzle, orifice, segmental baffle or other device, known to create an accelerational pressure drop in two-phase flow, can be substituted for the venturi. The venturi 3 however is preferred, since it readily accepts the annular two-phase flow from the twisted tape 2 and also gives a good correlation between the accelerational pressure drop measured across the venturi and the total mass flowrate (W). The venturi 3 is placed downstream of the twisted tape 2 for the above reason. The venturi includes a constricted throat section 18 in which the velocity of the two-phase flow increases while the pressure across the throat 18 decreases.

To measure the accelerational pressure drop across the venturi 3, two pressure taps 19 are provided leading into the venturi. As shown in Figure 2, the taps 19 are spaced inwardly from the ends of the venturi 3. The pressure taps 19 are identical to the pressure taps 11 previously disclosed and like reference numerals have been used to indicate like parts. A pressure line 20 interconnects the pressure taps 19 to opposite sides of a diaphragm magnetic-reluctance transducer 21.

Since pressure fluctuations in two-phase flow metering are usually high, pressure snubbers 22 are preferably included in the pressure lines 16, 20 between each of the pressure taps 11, 19 and the transducers 17, 21. These pressure snubbers 22 serve to dampen the pressure fluctuations. The snubbers 22 comprise a movable weighted piston (not shown) inserted in a thin capillary tube (not shown). To further limit pressure fluctuations, the pressure lines 16, 20 are periodically purged with either a gas or liquid. The gas or liquid filling the lines 16 and 20 acts as a means for transmitting the pressure from the pressure taps 11, 19 to the transducers 17, 21. Thus purging technique is standard in two-phase flow metering.

To protect the electronic transducers 17, 21, isolation valves 25 are included in the pressure lines 16, 20 on each side of the transducers 17, 21. Equalisation valves 26 are also included to further protect the transducers.

Opposite ends 23, 24 of the conduit 6 are threaded to connect the flowmeter 1 with the pipeline (not shown) carrying the two-phase flow. Preferably the diameter of the conduit 6 is the same as the diameter of the pipeline, so as not to further interrupt the two-phase flow.

In most two-phase flow metering situations, it is desirable to measure a third parameter, such as the static pressure of the stream. As will become evident from the description to follow, this third parameter is usually needed in order to correlate the above two pressure drop measurements with the individual flowrates of the two phases. This correlation includes physical properties such as the density and viscosity of each of the two phases. In a one-component two-phase stream such as wet steam, a measurement, of either the static pressure of the temperature of the stream, allows one to calculate the density and viscosity of each phase. With wet steam for instance, standard steam tables may be used. In a two-component two-phase stream both a temperature and static pressure measurement may be needed. If, however, the flowmeter 1 is to be used in a two-phase flow stream having known physical properties, the third parameter would not be needed.

In general, the third parameter can be measured anywhere in proximity to the twisted tape 2 and venturi 3. In Figure 2, means 30 are shown for measuring the static pressure of the two-phase flow downstream of the venturi. The means 30, includes a pressure tap 27, identical to the pressure tap 11, is provided in the conduit 6. A pressure line 28 leading from the tap 27 is connected to a pressure sensing device 29, such as an open ended mercury manometer or an electronic pressure transducer. If it is desirable to measure the temperature of the stream, a suitable temperature sensing device (not shown) may be provided in the flowmeter.

The following example is included to demonstrate the operability of the preferred embodiment of the flowmeter, and to show the type of calculations involved in correlating the flowmeter measurements with the individual flowrates of the two phases.

Example

A flowmeter as shown in Figures 1 and 2 was constructed and inserted into a 2.54 cm (1″) diameter pipeline carrying an air-water two-phase flow stream. The twisted tape swirl generator consisted of a 0.16 cm×2.54cm×30.48 cm (1/16″×1″×12″) length of stainless steel tape twisted in an anticlockwise direction (as viewed from the upstream end of the flowmeter) to a pitch of 10.16 cm (4 inches). The venturi consisted of a 9.53 cm (3-3/4″) length venturi section having an entrance and exit diameter of 2.54 cm (1″) and a throat diameter of 1.59 cm (5/8″). The static pressure of the two phase flow was measured downstream of the venturi with an open ended mercury manometer.

The D.C. signals from the transducers 17 and 21 were routed to a digital readout, chart recorder and mini-computer (not shown). The differential pressure signals recorded on the chart recorder were time averaged over 2—3 minutes.

To initially calibrate the flowmeter, the air-water stream was injected through the flowmeter at known air and water flowrates, $W_g$ and $W_f$ respectively, in a quality ($x$) range of 0.25 to 0.90.

Ultimately, the measurements from the venturi, twisted tape and static pressure sensor are to be combined to define any two of the parameters total mass flowrate ($W$), liquid mass flowrate ($W_f$), gas mass flowrate ($W_g$) and quality ($x$). Of course volumetric flowrates can also be calculated.

Theoretical models are known to correlate these pressure drop measurements with the above parameters. In this example the twisted tape results were modelled by the Lockart-Martinelli parameters $\bar{X}^2$ and $\bar{\phi}^2$ in their following form:

$$(1) \qquad \bar{X}^2 = \left[ \frac{Re_{gt}}{Re_{ft}} \right]^n \left[ \frac{\rho_g}{\rho_f} \right] \left[ \frac{W_f}{W_g} \right]^2$$

where
$Re_{gt}$ and $Re_{ft}$ are Reynold's numbers for the gas and liquid phases respectively;
$\rho_g$ and $\rho_f$ are the densities of gas and liquid phases respectively;

4

$$\overline{\phi}^2 = \frac{(\Delta P/\Delta L)_{tpt} D_H g_c \rho_g A^2}{2f\,W_g^2} \tag{2}$$

where

$(\Delta P/\Delta L)_{tpt}$ is the pressure drop across the twisted tape

$D_H$ is the hydraulic diameter of the conduit;

$g_c$ is the gravitational conversion factor

A is the cross sectional area of the conduit; and

f is Fannings friction factor.

The results from the venturi were modelled by the following modified Collins parameter $F_p$ and quality (x):

$$F_p = D^2 \left[ \frac{g_c \rho_g \Delta P_{tpv}}{W_2} \right]^{1/2} . \tag{3}$$

where D is the inside conduit diameter;

$\Delta P_{tpv}$ is the pressure drop across the venturi; and

$$x = \frac{W_g}{W_g + W_f} \tag{4}$$

The flowmeter was first calibrated with known flowrates $W_f$ and $W_g$. The pressure transducers 17 and 21 were calibrated by known techniques using a column of water. The results for the transducer calibrations were modelled by the following linear least squares equations:

$$(\Delta P/\Delta L)_{tpt} = 5.0509 \times 10^{-3} \times (\text{transducer reading}) + 1.1301 \times 10^{-3}; \tag{5}$$

and

$$\Delta P_{tpv} = 1.8756 \times 10^{-2} \times (\text{transducer reading}) - 2.1482 \times 10^{-2}. \tag{6}$$

olior

From the measurements of $\Delta P_{tpv}$, $(\Delta P/\Delta L)_{tpt}$ and the static pressure $P_s$ at a number of known flowrates $W_f$, $W_g$, a number of values of $F_p$, n, $\overline{\phi}^2$ and $\overline{X}^2$ were calculated. The values of $Re_{gt}$, $Re_{ft}$, $P_g$, and $P_f$ were calculated from the values $P_s$, the static pressure value, although in flows in which these values are assumed to be known the value of $P_s$ would not be required, using these results the venturi results were modelled by the linear relationship:

$$x = m\,F_p + b, \tag{7}$$

and the twisted tape results were modelled by the relationship:

$$\overline{\phi_g^2} = B_1 + B_2 \overline{X} + B_3 \overline{X}^2 \tag{8}$$

The parameters m, b, $B_1$, $B_2$ and $B_3$ were derived from a least squares analysis for a number of gas mass flowrate, $W_g$, values. For clarification purposes these values for $W_g$, $B_1$, $B_2$ and $B_3$, m and b are reproduced in Table 1.

TABLE 1
Least square parameters for the twisted tape and venturi models
Twisted tape mode: $\overline{\phi_g^2}=B_1+B_2\overline{X}+B_3\overline{X}^2$
Venturi model: $x=mF_p+b$

| $W_g$ Kg/hr (lb/hr) | $B_1$ | $B_2$ | $B_3$ | m | b |
|---|---|---|---|---|---|
| 29.35 (64.702427) | 1.75059 | 16.565439 | 3.471168 | 0.649527 | −0.154006 |
| 60.10 (132.4895) | 0.9729569 | 35.193932 | −45.160512 | 0.560633 | −0.151019 |
| 72.57 (159.9971) | 1.108096 | 38.224306 | −55.09309 | 0.537628 | −0.162189 |
| 101.05 (222.7917) | 1.16932 | 40.792134 | −43.551016 | 0.554722 | −0.205751 |
| 119.36 (263.138) | 1.485076 | 39.851965 | −24.578145 | 0.51217 | −0.178217 |

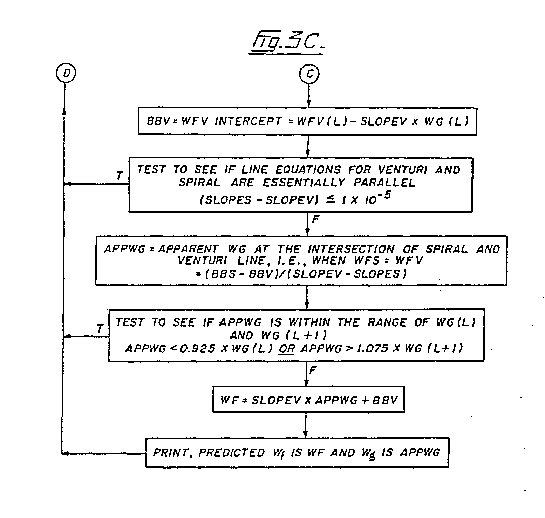

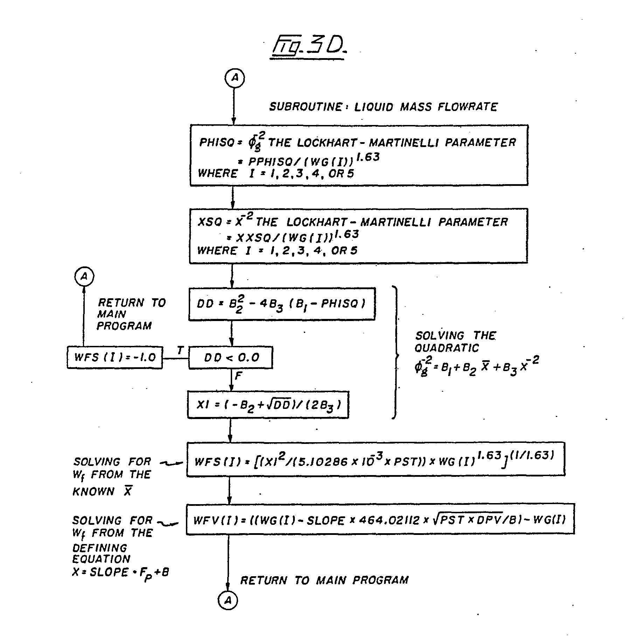

A computer program was constructed to utilize these relationships (7) and (8) in a linear interpolation technique to evaluate values for the gas and liquid flowrates, $W_g$ and $W_f$, for a given set of pressure readings $P_s$, $(\Delta P/\Delta L)_{tpt}$ and $\Delta P_{tpv}$. The computer program utilized is reproduced in Figures 3. By exploiting the $W_g$ level dependency shown in Table 1, values for $W_f$ were evaluated for each of equations (7) and (8). Subsequently, two sets of $W_f$ and $W_g$ values were generated from the venturi and twisted tape equations (7) and (8). The trend of $W_f$ with respect to $W_g$ for each set of values was quite different. Thus the intersection of both sets of data was used to represent the simultaneous solution of the venturi and twisted tape equations (7) and (8). This intersection was evaluated by applying a linear interpolation for each set of data points.

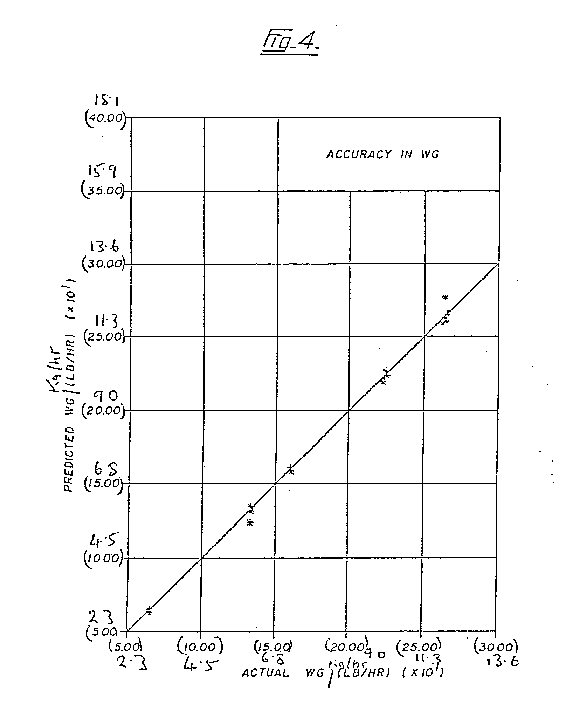

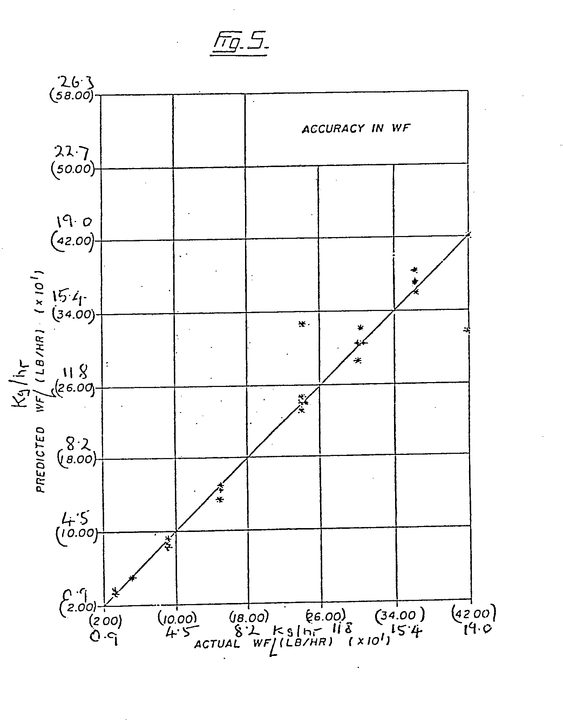

The efficiency of this technique of metering and correlating is illustrated in Figures 4 and 5 in which the $W_f$ and $W_g$ predicted values are plotted against the $W_f$ and $W_g$ actual values. Accuracy was generally within about 3% for $W_g$ and 6% for $W_f$. The accuracy of these predictions could be improved if more experimental data were used to decrease the size of the interval which required linear interpolation. Extrapolation beyond the original range used in calibrating the instrument is not advised.

**Claims**

1. A flowmeter for measuring differential pressures indicative of flowrates in a conduit carrying a gas and liquid flowing stream, wherein the flowmeter (1) comprises first means (2) for creating a frictional pressure drop in the conduit (6), means (4) for measuring the frictional pressure drop, second means (3) for creating an accelerational pressure drop in the conduit, and means (5) for measuring the accelerational pressure drop, the second means (3) preferably being located downstream of the first means (2).

2. A flowmeter as claimed in claim 1 wherein the first means (2) is a longitudinally twisted tape (7) positioned in the conduit (6) and adapted to cause swirled flow in the stream.

3. A flowmeter as claimed in claim 1 or claim 2, wherein the second means (3) is a venturi positioned in the conduit (6).

4. A flowmeter as claimed in claim 2 and claim 3, wherein the means (4) for measuring the frictional pressure drop comprises pressure transducer means connected across at least a portion of the twisted tape (7), and the means (5) for measuring the accelerational pressure drop comprises pressure transducer means connected across at least a portion of the venturi (3).

5. A flowmeter as claimed in any one of claims 1 to 4, wherein third means (29) are provided for measuring the static pressure in the conduit (6), said third means (29) preferably comprising a manometer connected to the conduit (6).

6. A method for measuring differential pressures indicative of flowrates in a conduit carrying a gas and liquid flowing stream, the method comprising the steps of creating a frictional pressure drop in the conduit (6), measuring the frictional pressure drop, creating an accelerational pressure drop in the conduit, measuring the accelerational pressure drop, and determining by mathematical relationships incorporating the said measured pressure drops the flowrates of the individual phases of the stream.

**Revendications**

1. Débitmètre destiné à mesurer des pressions différentielles indicatives de débits dans une conduite transportant un courant en circulation composé de gaz et de liquide, où le débitmètre (1) comprend des premiers moyens (2) servant à créer une chute de pression par frottement dans la conduite (6), des moyens (4) servant à mesurer la chute de pression par frottement, des deuxièmes moyens (3) servant à créer une chute de pression par accélération dans la conduite, et des moyens (5) servant à mesurer la chute de pression par accélération, les deuxièmes moyens (3) étant de préférence placés en aval des premiers moyens (2).

2. Débitmètre selon la revendications 1, où les premiers moyens (2) sont constitués par un ruban torsadé longitudinalement (7) positionné dans la conduite (6) et conçu pour donner naissance à un écoulement tourbillonnaire dans le courant.

3. Débitmètre selon la revendication 1 ou 2, où les deuxièmes moyens (3) sont un diffuseur Venturi placé dans la conduite (6).

4. Débitmètre selon la revendication 2 et la revendication 3, où les moyens (4) servant à mesurer la chute de pression par frottement comprennent des moyens transducteurs de pression raccordés de part et d'autre d'au moins une partie du ruban torsadé (7) et les moyens (5) servant à mesurer la chute de pression par accélération comprennent des moyens transducteurs de pression raccordés de part et d'autre d'au moins une partie du diffuseur Venturi (3).

5. Débitmètre selon l'une quelconque des revendications 1 à 4, où des troisièmes moyens (29) sont prévus pour mesurer la pression statique dans la conduite (6), lesdits troisièmes moyens (29) comprenant de préférence un monomètre relié à la conduit (6).

6. Procédé de mesure de pressions différentielles indicatives de débits dans une conduite transportant un courant en circulation de gaz et de liquide, le procédé comprenant les opérations qui consistent à créer une chute de pression par frottement dans la conduite (6), à mesurer la chute de pression par frottement, à créer une chute de pression par accélération dans la conduite, à mesurer la chute de pression par accélération, et déterminer par des relations mathématiques, qui contiennent lesdites chutes de pression mesurées, les débits des phases respectives du courant.

**Patentansprüche**

1. Strömungsmesser zum Messen von Differenzdrücken, die die Strömungsmengen in einer Leitung angeben, die eine Gas- und eine Flüssigkeitsströmung führt, wobei der Strömungsmesser (1) enthält: eine erste Einrichtung (2) zum Erzeugen eines Reibungsdruckverlustes in der Leitung (6), eine Einrichtung (4) zum Messen des Reibungsdruckverlustes, eine zweite Einrichtung (3) zum Erzeugen eines Beschleunigungsdruckverlustes in der Leitung und eine Einrichtung (5) zum Messen des Beschleunigungsdruckverlustes, wobei die zweite Einrichtung (3) vorzugsweise stromabwärts von der ersten Einrichtung (2) angeordnet ist.

2. Strömungsmesser nach Anspruch 1, bei dem die erste Einrichtung (2) ein in Längsrichtung gewundenes Band (7) ist, das in der Leitung (6) angeordnet und dazu eingerichtet ist, einen wirbelnden Fluß in der Strömung hervorzurufen.

3. Stromungsmesser nach Anspruch 1 oder Anspruch 2, bei dem die zweite Einrichtung (3) eine Venturidüse ist, die in der Leitung (6) angeordnet ist.

4. Strömungsmesser nach Anspruch 2 und Anspruch 3, bei dem die Einrichtung (4) zum Messen des Reibungsdruckverlustes einen Druckwandler aufweist, der wenigstens über einen Teil des gewundenen Bandes (7) angeschlossen ist, und daß die Einrichtung (5) zum Messen des Beschleunigungsdruckverlustes einen Druckwandler aufweist, der wenigstens über einen Teil der Venturidüse (3) angeschlossen ist.

5. Strömungsmesser nach einem der Ansprüche 1 bis 4, bei dem eine dritte Einrichtung (29) zum Messen des statischen Drucks in der Leitung (6) vorgesehen ist, welche dritte Einrichtung (29) vorzugsweise ein Manometer aufweist, das mit der Leitung (6) verbunden ist.

6. Verfahren zum Messen von Differenzdrücken, die Strömungsmengen in einer Leitung angeben, die eine Gas- und Flüssigkeitsströmung führt, enthaltend die Schritte: Erzeugen eines Reibungsdruckverlustes in der Leitung (6), Messen des Reibungsdruckverlustes, Erzeugen eines Beschleunigungsdruckverlustes in der Leitung, Messen des Beschleunigungsdruckverlustes und Bestimmen durch mathematische Verhältnisse, die die genannten Druckverluste einschließen, die Strömungsmengen der einzelnen Phasen der Strömung.

_Fig.1_

FLOW →

Fig.2.

## Fig. 3A.

FLOW CHART FOR METERING PROGRAM

READ ACTUAL $W_f$ (WWF), ACTUAL $W_g$ (WWG), MERCURY MANOMETER READING (STI), VENTURI TRANSDUCER READING (V I), AND SPIRAL TRANSDUCER READING (SP I)

EVALUATE STATIC PRESSURE, PST, IN ATMOSPHERES
$$PST = (STI - 54.5) \times 2.456 \times 10^{-3}$$

EVALUATE DIFFERENTIAL VENTURI PRESSURE, DPV, IN PSIG
$$DPV = 1.8756 \times 10^{-2} \times VI - 2.1482 \times 10^{-2}$$

EVALUATE DIFFERENTIAL SPIRAL PRESSURE, DPSP, IN PSIG
$$DPSP = 5.0509 \times 10^{-3} \times SPI + 1.1301 \times 10^{-3}$$

PARTIAL EVALUATION OF THE LOCKHART - MARTINELLI PARAMETERS, PPHISQ, XXSQ

$$PPHISQ = \left[ DPSP \times \frac{144\, in^2}{1\, ft^2} \times \frac{PST}{\frac{8}{12}\, ft} \right] \Big/ 3.77714 \times 10^{-3} \frac{lb_f\, atm}{ft^3} \left[ \frac{hr}{lb_m} \right]^{1.63}$$

$$XXSQ = 5.10286 \times 10^{-3} \frac{(lb_m / hr)^{1.63}}{atm} \times PST$$

(A) ← EVALUATION OF $W_f$ FROM SPIRAL (WFS(I)) AND VENTURI (WFV(I)) MODELS AT $W_g$ (WG(I)) = 64.702427 lb/hr = 29·3485. Kg/hr

(A) ← EVALUATION OF $W_f$ FROM SPIRAL (WFS(2)) AND VENTURI (WFV(2)) MODELS AT $W_g$ (WG(2)) = 132.4895 lb/hr = 60·0962 Kg/hr

(B)

3

**0 076 882**

### Fig.3B.

(B)

(A) ← EVALUATION OF $W_f$ FROM SPIRAL (WFS(3)) AND VENTURI (WFV(3)) MODELS AT $W_g$ (WG(3)) = 159.9921 lb/hr. = 72.5712 Kg/hr.

(A) ← EVALUATION OF $W_f$ FROM SPIRAL (WFS(4)) AND VENTURI (WFV(4)) MODELS AT $W_g$ (WG(4)) = 222.7917 lb/hr = 101.057 Kg/hr

(A) ← EVALUATION OF $W_f$ FROM SPIRAL (WFS(5)) AND VENTURI (WFV(5)) MODELS AT $W_g$ (WG(5)) = 263.138 lb/hr = 119.357 Kg/hr

LINEAR INTERPOLATION    L = 0

L = L + 1

L > 4 —T→ STOP

F

T→ WFS (L+1) = -1

F

T→ WFS(L) = -1

F

SLOPES = SLOPE OF LINE GOING THROUGH WFS (L+1) AND WFS (L)
$$= \frac{(WFS(L+1) - WFS(L))}{(WG(L+1) - WG(L))}$$

BBS = WFS INTERCEPT = WFS (L) - SLOPES × WG (L)

SLOPE V = SLOPE OF LINE GOING THROUGH WFV (L+1) AND WFV(L)
= (WFV(L+1) - WFV(L))/(WG(L+1) - WG (L))

(D)                    (C)

## Fig.3C.

(D)                                              (C)

BBV = WFV INTERCEPT = WFV(L) - SLOPEV x WG (L)

T | TEST TO SEE IF LINE EQUATIONS FOR VENTURI AND
    SPIRAL ARE ESSENTIALLY PARALLEL
    $(SLOPES - SLOPEV) \leq 1 \times 10^{-5}$

F

APPWG = APPARENT WG AT THE INTERSECTION OF SPIRAL AND
VENTURI LINE, I.E., WHEN WFS = WFV
= (BBS - BBV)/(SLOPEV - SLOPES)

T | TEST TO SEE IF APPWG IS WITHIN THE RANGE OF WG(L)
    AND WG (L+1)
    APPWG < 0.925 x WG(L) OR APPWG > 1.075 x WG (L+1)

F

WF = SLOPEV x APPWG + BBV

PRINT, PREDICTED $W_f$ IS WF AND $W_g$ IS APPWG

*Fig. 3D.*

Ⓐ

SUBROUTINE: LIQUID MASS FLOWRATE

PHISQ = $\phi_s^2$ THE LOCKHART - MARTINELLI PARAMETER
= PPHISQ/(WG(I))$^{1.63}$
WHERE I = 1, 2, 3, 4, OR 5

XSQ = $\bar{X}^2$ THE LOCKHART - MARTINELLI PARAMETER
= XXSQ/(WG(I))$^{1.63}$
WHERE I = 1, 2, 3, 4, OR 5

Ⓐ

RETURN TO MAIN PROGRAM

DD = $B_2^2 - 4B_3 (B_1 - PHISQ)$

WFS(I) = -1.0 — T — DD < 0.0

SOLVING THE QUADRATIC
$\phi_s^{-2} = B_1 + B_2 \bar{X} + B_3 \bar{X}^2$

F

XI = $(-B_2 + \sqrt{DD})/(2B_3)$

SOLVING FOR $W_f$ FROM THE KNOWN $\bar{X}$

WFS(I) = $[(XI^2/(5.10286 \times 10^3 \times PST)) \times WG(I)^{1.63}]^{(1/1.63)}$

SOLVING FOR $W_f$ FROM THE DEFINING EQUATION X = SLOPE · $F_p$ + B

WFV(I) = ((WG(I) - SLOPE × 464.02112 × $\sqrt{PST \times DPV/B}$) - WG(I)

RETURN TO MAIN PROGRAM

Ⓐ

_Fig. 4._

## Fig. 5.